# EUROPEAN PATENT APPLICATION

(11) **EP 3 754 867 A1**
(43) Date of publication of application: **23.12.2020**
(21) Application number: 19918288.2
(22) Date of filing: 06.03.2019
(51) Int. Cl.: H04B 10/071, H04B 10/29, H01S 3/091

(54) **SUBMARINE NETWORK DEVICE AND SUBMARINE CABLE SYSTEM**

(71) Applicant: Huawei Marine Networks Co., Ltd., Tianjin 300457 (CN)
(72) Inventor: WANG, Yan, Shenzhen, Guangdong 518129 (CN); XU, Changwu, Shenzhen, Guangdong 518129 (CN); MA, Liping, Shenzhen, Guangdong 518129 (CN); YANG, Li, Shenzhen, Guangdong 518129 (CN)
(74) Representative: Cabinet Beau de Loménie
(86) International application number: PCT/CN2019/077198
(87) International publication number: WO 2020/177101

(57) **Abstract**

This application provides a submarine network device and a submarine cable system that may accurately detect a fault of a submarine optical repeater in time. The device comprises: a first fiber and a second fiber; at least one first pump laser, configured to supply pumping light to a first optical amplification unit located in the first fiber; the first optical amplification unit, configured to amplify and then output a first probe signal sent from a first site to a second site; a first fiber coupler located in the first fiber, configured to receive a first reflected optical signal obtained from the first probe signal after Rayleigh backscattering, and send a portion of the first reflected optical signal to a second fiber coupler located in the second fiber; at least one second pump laser, configured to supply pumping light to a second optical amplification unit; a second optical amplification unit, configured to amplify and then output a second data optical signal sent by the second site to the first site; and a second fiber coupler, configured to receive a portion of the first reflected optical signal output by the first fiber coupler.

## Description

### FIELD OF THE INVENTION

The present application relates to the field of submarine optical cable communications, and in particular, to a submarine network device and a submarine cable system.

### BACKGROUND OF THE INVENTION

The large-scale service interruption caused by the fault of a submarine optical cable communication system, which is an important international communication measure, will directly affect people's work and life. Thus fast and accurate fault positioning has a great significance on the operation and maintenance of the submarine cable system. A submarine fiber optical cable communication system needs to be equipped with a submarine optical repeater to realize the amplification of an optical signal transmitted. Under normal conditions, an optical signal needs to be amplified in an optical repeater after being transmitted every tens of kilometers in the submarine cable so as to make up for the power loss during transmission. Because periodic power compensation is made on the optical signal, the submarine cable communication system may cross the Pacific Ocean and reach a transmission distance of over ten thousands of kilometers. The currently mature submarine optical repeaters are based on erbium doped fiber amplifier (EDFA) technology, the gain medium of EDFA is erbium-doped fiber, and during the normal working of an EDFA, a pump laser is required for providing excitation energy to the erbium-doped fiber.

Under normal conditions, the fibers in a submarine cable appear in pairs, and for the land-side station of each submarine cable communication system, one fiber (upstream fiber) in the pair is configured to send an optical signal to the land-side station of the opposite terminal, and the other fiber (downstream fiber) is configured to receive an optical signal sent by the land-side station of the opposite terminal. Similarly, each submarine optical repeater generally comprises optical signal amplification units in pairs, and the two optical amplification units (OA) respectively amplify optical signals transmitted in the upstream fiber and the downstream fiber. The fault of the pump laser will cause the optical repeater unable to work normally. In order to improve the reliability of the optical repeater, the repeater generally employs "1 fiber pair 2 pumps" redundant backup (single fiber pair 2×2 protection). That is, the output of 2 pump lasers, after being coupled by a 2×2 3dB coupler, is respectively transferred to the two paths of optical amplification units of a fiber pair in a ratio of 50%:50%. Thus each pump laser provides a half of the pumping energy to each path of amplifier respectively. When one pump laser fails, the two paths of amplifier can still maintain a high enough output power, so that the input power of the downstream optical repeater can still be in a normal working range, and the system service will not be interrupted due to pump fault.

At present, one method for monitoring the underwater portion of a submarine cable communication system is to provide a cross-coupling path between each pair of fibers inside a repeater using a Coherent Optical Time Domain Reflectometer (COTDR) technology. The Rayleigh backscattered and/or reflected light of the probe pulse light incident on the upstream link can be coupled into the downstream link and transmitted along the downstream fiber and amplified by the downstream optical amplification unit when passing through the optical repeater. However, for the existing submarine optical cable communication system COTDR optical signal cross-coupling method, fault of the repeater cannot be identified in time, or the noise figure of the optical repeater may be made worse and the transmission performance will be degraded.

### SUMMARY OF THE INVENTION

Therefore, the embodiments of the present application provide a submarine network device and a submarine cable system, which can accurately detect the fault of a submarine optical repeater in time, and at the same time, guarantee a low noise figure of the optical repeater and a good transmission quality of the submarine cable system, and lower the maintenance cost of the device.

In a first aspect, one embodiment of this application provides a submarine network device comprising a first fiber and a second fiber. The device further includes:
at least one first pump laser, configured to supply pumping light to a first optical amplification unit;
the first optical amplification unit located in the first fiber, configured to receive a first probe signal sent from a first site to a second site, and amplify and then output the first probe signal;
a first fiber coupler located in the first fiber, configured to receive a first reflected optical signal and send a portion of the first reflected optical signal to a second fiber coupler located in the second fiber, wherein the first reflected optical signal is generated from the amplified first probe signal after Rayleigh backscattering;
at least one second pump laser, configured to supply pumping light to a second optical amplification unit;
the second optical amplification unit located in the second fiber, configured to amplify a second data optical signal sent by the second site to the first site and then output via the second fiber coupler; and
the second fiber coupler, configured to receive a portion of the first reflected optical signal output by the first fiber coupler and send a portion of the first reflected optical signal toward the direction of the first site.

In a first possible implementation of the first aspect, the submarine network device includes a fiber set, a pump laser set, an optical amplification unit set, a primary fiber coupler set and a secondary fiber coupler set. The fiber set includes the first fiber and the second fiber. The optical amplification unit set includes the first optical amplification unit and the second optical amplification unit. The pump laser set includes the first pump laser and the second pump laser. The primary fiber coupler set includes N primary fiber couplers, and the secondary fiber coupler set includes N secondary fiber couplers, wherein N being an integer greater than or equal to 3. The fiber set is configured to connect the pump laser set, the primary fiber coupler set, the secondary fiber coupler set and the optical amplification unit set. An input port of each primary fiber coupler in the primary fiber coupler set is at least connected with a pump laser. An output port of each secondary fiber coupler in the secondary fiber coupler set is connected with at least one erbium doped fiber amplifier (EDFA). Each primary fiber coupler in the primary fiber coupler set is adjacent to another 2 primary fiber couplers in the primary fiber coupler set, and each secondary fiber coupler in the secondary fiber coupler set is adjacent to another 2 secondary fiber couplers in the secondary fiber coupler set. Output ports of each primary fiber coupler in the primary fiber coupler set are respectively connected with two different secondary fiber couplers that are spaced by one secondary fiber coupler; and input ports of each secondary fiber coupler in the secondary fiber coupler set are respectively connected with two different primary fiber couplers that are spaced by one primary fiber coupler.

Each pump laser in the pump laser set is configured to emit pumping light. Each primary fiber coupler in the primary fiber coupler set is configured to couple the pumping laser received, and output two paths of primary pumping laser. The two paths of primary pumping laser are respectively output to the two different secondary fiber couplers. Each secondary fiber coupler in the secondary fiber coupler set is configured to couple the primary pumping laser received, and output at least one path of secondary pumping laser to the at least one EDFA.

In conjunction with the first aspect and the first possible implementation of the first aspect, in a second possible implementation of the first aspect, the submarine network device is further characterized in that: the submarine network device includes 2 first pump lasers and 2 second pump lasers, each of the first pump lasers provides 50% of energy to the first amplification unit, and each of the second pump lasers provides 50% of energy to the second amplification unit; or
the submarine network device includes 4 first pump lasers or 4 second pump lasers, each of the first pump lasers provide 25% of energy to the first amplification unit, and each of the second pump lasers provides 25% of energy to the second amplification unit. That is, the output of 4 pump lasers is output to the four paths of optical amplification units of two fiber pairs after being coupled by the coupling unit, and each pump laser respectively provides 1/4 of pumping energy to each amplifier. Under this circumstance, a fault of one pump thereof has less affect on the system optical signal-to-noise ratio.

In conjunction with the first aspect and the first to second possible implementation of the first aspect, in a third possible implementation of the first aspect, the first fiber and the second fiber belong to the same fiber pair, or the first fiber and the second fiber belong to different fiber pairs.

In conjunction with the first aspect and the first to the third possible implementation of the first aspect, in a fourth possible implementation of the first aspect, the first optical amplification unit and the second optical amplification unit are EDFAs.

In conjunction with the first aspect and the first to the fourth possible implementation of the first aspect, in a fifth possible implementation of the first aspect, the submarine network device is an optical repeater.

In conjunction with the first aspect and the first to the fifth possible implementation of the first aspect, in a sixth possible implementation of the first aspect, the first optical amplification unit is further configured to:
receive a first data optical signal sent from the first site to the second site, and amplify and then output the first data optical signal.

In conjunction with the first aspect and the first to the sixth possible implementation of the first aspect, in a seventh possible implementation of the first aspect, the second optical amplification unit is further configured to:
receive the second data optical signal sent from the second site to the first site.

In conjunction with the first aspect and the first to the seventh possible implementation of the first aspect, in an eighth possible implementation of the first aspect, the first fiber coupler is further configured to:
receive the amplified first data optical signal output by the first optical amplification unit, and send the amplified first data optical signal toward the direction of the second site.

In conjunction with the first aspect and the first to the eighth possible implementation of the first aspect, in a ninth possible implementation of the first aspect, the second fiber coupler is further configured to:
receive the amplified second data optical signal output by the second optical amplification unit, and send the amplified second data optical signal toward the direction of the first site.

In a second aspect, one embodiment of this application provides a submarine cable system, which includes the submarine network device according to the first aspect and any implementation of the first aspect, wherein the system further includes:
the first site, configured to send the first probe signal to the submarine network device via the first fiber;
a first upstream submarine network device, configured to receive the portion of the first reflected optical signal from the second fiber coupler, and send the portion of the first reflected optical signal toward the direction of the first site; wherein the first reflected optical signal is obtained from the amplified first probe signal after Rayleigh backscattering; and
the first site, configured to receive the portion of the first reflected optical signal, and judging whether a pump laser in the at least one first pump laser fails according to the intensity of the portion of the first reflected optical signal.

In a first possible implementation of the second aspect, a pump laser in the at least one first pump laser fails, and the submarine cable system further includes:
a first downstream submarine network device, configured to receive first data signal light from the first optical amplification unit of the submarine network device, perform gain compensation on the first data signal light, and send the gain-compensated first data signal light toward the direction of the second site; wherein the output power of the first data signal light is less than a rated output power, and the rated output power is the output power during the normal working of the first optical amplification unit.

In conjunction with the second aspect and the first possible implementation of the second aspect, in a second possible implementation of the second aspect, the submarine cable system further includes:
a second downstream submarine network device, configured to receive the gain-compensated first data signal light from the first downstream submarine network device, and perform additional gain compensation on the gain-compensated first data signal light; wherein the gain-compensated first data signal light is less than the rated output power.

In the submarine network device and the submarine cable system according to the embodiments of this application, an output terminal of the optical amplification unit on the upstream fiber is cross coupled with an output terminal of the optical amplification unit on the downstream fiber, and the optical amplification unit on the upstream fiber and the optical amplification unit on the downstream fiber respectively employ a different set of pump lasers to provide pumping light. After one optical amplification unit fails, the probe signal emitted by a site, after Rayleigh backscattering, may be looped back to the fiber having another optical amplification unit and transmitted back to the site. Since the two optical amplification units do not share a set of pump lasers, the optical amplification unit with no pump fault will not perform gain compensation on the power of the probe signal, and the site may fast detect a fault of a pump laser, so that a fault of an optical repeater may be positioned and repared in time, thereby shortening the service interruption time.

### BRIEF DESCRIPTION OF THE DRAWINGS

In order to more clearly illustrate the technical solutions of the embodiments of this application or of the prior art, the drawings employed in the description of the embodiments or the prior art will be briefly introduced below. Apparently, the drawings in the description below are only some embodiments of this application. For persons of ordinary skills in the art, other drawings or embodiments may also be obtained according to these drawings and descriptions without paying creative labor. This application aims to cover all of these drawings or embodiments derived thereof.
FIG. 1 is a structural representation of a submarine cable communication system according to one embodiment of this application;
FIG. 2 is a structural representation of an optical repeater according to one embodiment of this application;
FIG. 3 is a structural representation of a submarine network device according to one embodiment of this application;
FIG. 4 is a structural representation of another submarine network device according to one embodiment of this application;
FIG. 5 is a structural representation of yet another submarine network device according to one embodiment of this application;
FIG. 6a is a schematic diagram showing a fault of a submarine network device in a submarine communication system according to one embodiment of this application;
FIG. 6b is a comparison diagram of detection curves in a fault state and a normal state of a submarine network device in a submarine communication system according to one embodiment of this application;
FIG. 7 is a structural representation of yet another submarine network device according to one embodiment of this application;
FIG. 8 is a three-dimensional structure diagram of a submarine optical repeater according to one embodiment of this application;
FIG. 9 is an unfolded view of a submarine optical repeater according to one embodiment of this application; and
FIG. 10 is a structural representation of a submarine network system according to one embodiment of this application.

### DETAILED DESCRIPTION OF THE EMBODIMENTS

The embodiments of this application provide a submarine network device that may accurately detect a fault of a submarine optical repeater in time, and at the same time guarantee low noise figure and high transmission quality of an optical repeater, and lower the device maintenance cost.

Terms "first", "second", "third", "fourth" and the like (if exists) in the specification, the claims, and the above drawings of this application are used for distinguishing similar objects, rather than describing a specific order or sequence. It should be understood that data used in such a manner may be interchanged under appropriate circumstances so as to implement the embodiments described herein in an order other than those shown or described herein. Additionally, terms "include" and "have" and any variations thereof intend to cover nonexclusive "include". For example, a process, a method, a system, a product or a device including a series of steps or units are not necessarily limited to those steps or units listed explicitly; instead, other steps or units that are not listed explicitly or intrinsic to the process, method, product or device may be included.

The present application relates to the technical field of submarine optical cable communications, and in particular, to an optical structure of an optical relay and amplification fiber link to transmit a COTDR monitor signal.

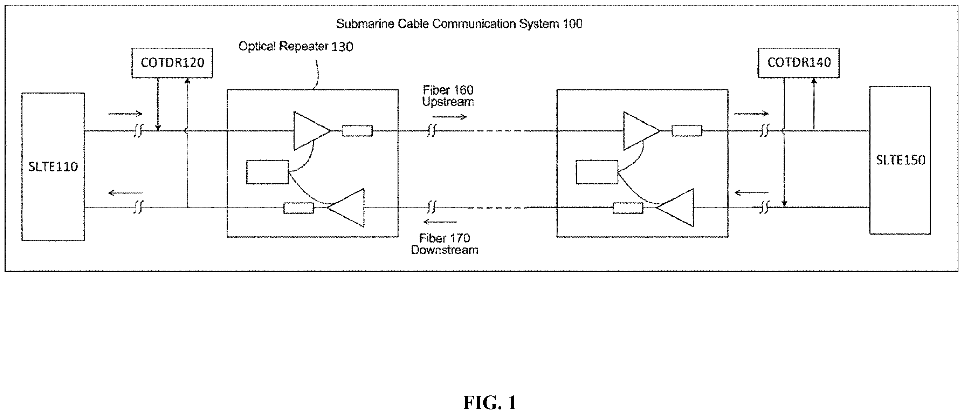

The large-scale service interruption caused by the fault of a submarine optical cable communication system, which is an important international communication measure, will directly affect people's work and life. Thus fast and accurate fault positioning has a great significance on the operation and maintenance of the submarine cable system. The structure of a typical submarine cable communication system is shown in FIG. 1. A submarine cable communication system 100 generally includes a Submarine Line Terminal Equipment (SLTE) 110, a Coherent Optical Time Domain Reflectometer (COTDR) 120, an optical repeater 130, a COTDR140 and a SLTE150, etc.; wherein, the submarine fiber cable includes a fiber 160 (upstream) and a fiber 170 (downstream). The dashed part in FIG. 1 represents that the submarine cable communication system 100 generally includes a plurality of optical repeaters 130. Under normal conditions, an optical signal needs to be amplified in an optical repeater after being transmitted every tens of kilometers in the submarine cable so as to make up for the power loss during transmission. Because periodic power compensation is made on the optical signal, the submarine cable communication system may cross the Pacific Ocean and reach a transmission distance of over ten thousands of kilometers.

The fibers in a submarine cable appear in pairs, and for the land-side station of each submarine cable communication system, one fiber (upstream fiber 160) in the pair is configured to send an optical signal to the land-side station of the opposite terminal, and the other fiber (downstream fiber 170) is configured to receive an optical signal sent by the land-side station of the opposite terminal. Similarly, each submarine optical repeater generally includes optical signal amplification units in pairs, and the two optical signal amplification units respectively amplify the optical signals transmitted in the fiber 160 (upstream) and the fiber 170 (downstream). The optical signal amplification units both need to be equipped with a pump laser with a certain wavelength (generally 980nm), which can realize amplification of an optical signal by converting the energy of pumping light into energy 9 of a signal light.

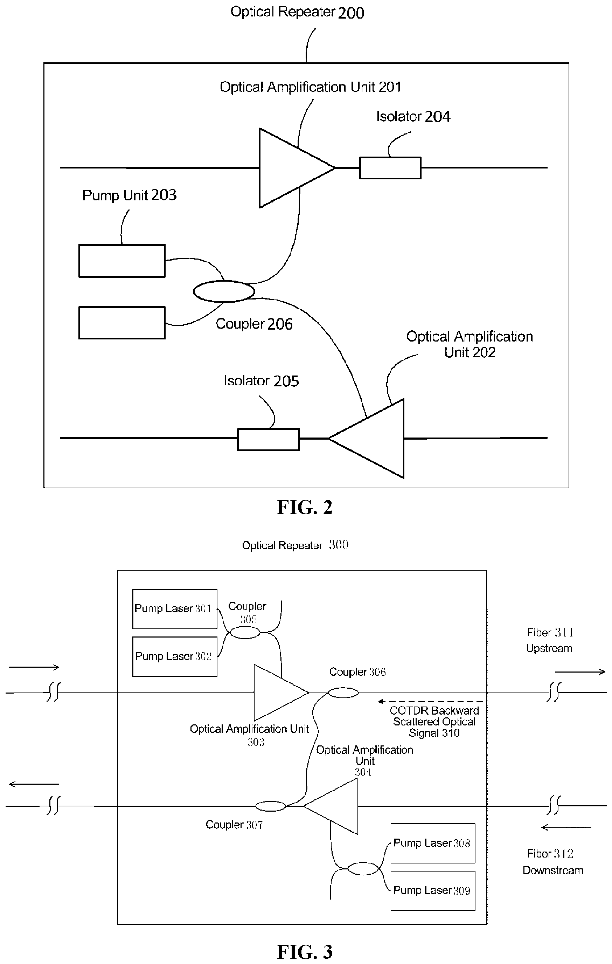

The fault of the pump laser will cause the optical repeater unable to work normally, and in order to improve the reliability of the optical repeater, the repeater generally employs "1 fiber pair 2 pumps" redundant backup (single fiber pair 2×2 protection). As shown in FIG. 2, the output of a pump unit 203 through 2 pump lasers is coupled by a 2×2 3dB coupler 206 and then transferred to an optical amplification unit 201 and an optical amplification unit 202 of a fiber pair in a ratio of 50%:50%. Thus each pump laser provides a half of the pumping energy to each path of amplifier respectively. When one pump laser fails, the two paths of amplifier can still maintain a high enough output power, so that the input power of the downstream optical repeater can still be in a normal working range, and the system service will not be interrupted due to pump fault. In the industry, the repeater may also be designed to employ two fiber pairs 4 pump redundant backups (two fiber pairs 4×4 protection), that is, the output of 4 pump lasers is output to the four paths of optical amplification units of two fiber pairs after being coupled by the coupling unit, and each pump laser respectively provides 1/4 of pumping energy to each path of amplifier; at this moment, a fault of one pump thereof has less affect on the system optical signal-to-noise ratio.

Due to the particularity of the submarine cable system, the whole link can only be measured at a land-side station as a whole, which is different from a land fiber communication system that can be measured independently on each span. At present, one of the methods for monitoring the underwater portion of a submarine cable communication system is to employ the Coherent Optical Time Domain Reflectometer (COTDR) technology. That is, a detection light pulse signal is emitted into the fiber, and when light pulse is transmitted in the fiber, Rayleigh backscattered light will be generated continuously along the fiber. Reflection will occur at a connector, a mechanical splice, a fracture or a fiber end. A portion of the Rayleigh backscattered light and reflected light will be transmitted along the fiber back to the emitting end and received by a detector of the COTDR, and the working state of the submarine optical cable and the repeater may be judged from the intensity change of the light pulse received. However, as required by performance optimization, an isolator is generally required inside the optical amplification unit. Since the isolator has a characteristic that an optical signal passing forward is attenuated slightly while an optical signal passing reversely is attenuated greatly, which may resulted in that only an optical signal transmitted forward can pass through the optical repeater and be amplified, while an optical signal transmitted reversely will be blocked. In such a case, when a user monitors the underwater portion of the submarine cable system via a COTDR at a land-side station, if a COTDR detection light pulse is input to the upstream link, the detection light pulse may be transmitted normally along the upstream fiber and amplified by the upstream optical amplification unit when passing through the optical repeater; however, the backward scattered or reflected optical signal of the detection light pulse will be blocked by the isolator of each optical amplification unit and cannot be reversely transmitted back to the land-side station, so that the COTDR cannot receive the probe signal. Therefore, in order to be able to use COTDR technology to monitor a underwater device in a submarine cable system, coupling connection must be realized between each pair of fibers inside a repeater, that is, a cross-coupling path must be set, so that the Rayleigh backscattered and/or reflected optical signal of the probe signal incident on the upstream link can be coupled into the downstream link, transmitted along the downstream fiber and amplified by the downstream optical amplification unit when passing through the optical repeater.

The objective of the embodiment of this application is to solve the problem that COTDR optical signal cross-coupling solution of the existing submarine optical cable communication system cannot compromise the low noise figure of the optical repeater and the detection of the aging and fault of the pump laser. This application provides a COTDR optical signal cross-coupling solution for detecting the aging and fault of a submarine network device, and specifically, a pump laser in an underwater optical repeater device. In this solution, it only requires to add a coupler to the output terminal of an optical amplification unit of the optical repeater, thus the noise figure of the optical repeater will not be degraded. By using this solution, the problem of pump laser aging or fault can be detected, and the optical repeater fault can be positioned in time.

As shown in FIG. 3, in one embodiment of this application, a three-port coupler is added to the output terminal of each optical amplification unit in the optical repeater of the optical relay and amplification fiber link so as to realize an out-to-out coupling cross-coupling path of a COTDR backward scattered optical signal. Specifically, take the optical repeater k300 (RPT k) in FIG. 3 for example, the detection ports of the output coupler 306 of the upstream-direction optical amplification unit 303 of a fiber 311 and the output coupler 307 of the downstream-direction optical amplification unit 304 of the fiber 312 are connected to form an out-to-out coupling cross-coupling path of the COTDR backward scattered optical signal. On the upstream direction, a COTDR backward scattered optical signal 310 is generated from the light output by the optical amplification unit 303 after Rayleigh backscattering, a portion of the optical signal of the COTDR backward scattered optical signal 310 is looped via the coupler 306 back to the coupler 307, and the coupler 307 is connected with the output terminal of the downstream-direction optical amplification unit 304. Wherein, the fiber 311 and the fiber 312 may belong to the same fiber pair or different fiber pairs, but no pump redundant backup relation can exist between the upstream-direction optical amplification unit 303 of the fiber 311 and the downstream-direction optical amplification unit 104 of the fiber 312. That is, the pumping light providing energy to the optical amplification unit 303 and the optical amplification unit 304 are required to come from totally different two groups of pump lasers. In FIG. 3, the pump laser 301 and the pump laser 302 provide energy to the optical amplification unit 303 via the coupler 305, and the pump laser 308 and the pump laser 309 provide energy to the optical amplification unit 304.

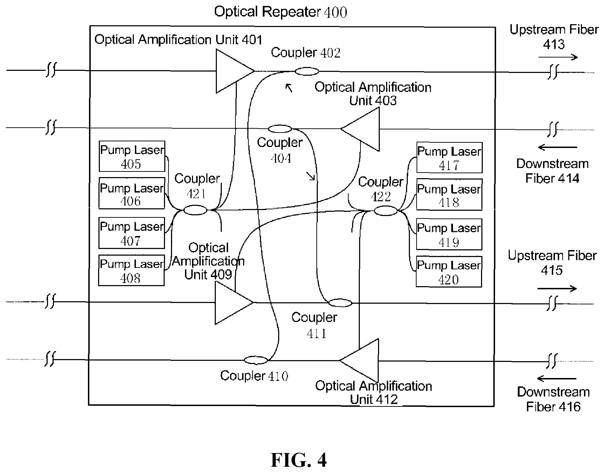

As shown in FIG. 4, one embodiment of this application provides another submarine network device, which may be an optical repeater. In the optical repeater 400, the detection port of the output coupler 402 of the upstream-direction optical amplification unit 401 of the first fiber pair is connected with the detection port of the output coupler 410 of the downstream-direction optical amplification unit 412 of the second fiber pair, to form an out-to-out coupling cross-coupling path of the COTDR backward scattered optical signal. At the same time, pumping light energy is provided to the upstream-direction optical amplification unit 401 and the downstream-direction optical amplification unit 403 of the first fiber pair by the same group of redundant backup pump lasers, the number of redundant backup pump lasers in the same group may be 2 or more than 2. In FIG. 4, energy is provided to the optical amplification unit 401 and the optical amplification unit 403 by a group of redundant backup pump lasers formed by the pump laser 405, the pump laser 406, the pump laser 407 and the pump laser 408. Pumping light energy is provided to the upstream-direction optical amplification unit 409 and the downstream-direction optical amplification unit 412 of the second fiber pair by another group of pump lasers. In FIG. 4, pumping light energy is provided to the optical amplification unit 409 and the optical amplification unit 412 by another group of redundant backup pump lasers formed by the pump laser 417, the pump laser 418, the pump laser 419 and the pump laser 420. In the upstream fiber 413, a COTDR backward scattered optical signal is generated from the light output by the optical amplification unit 401 after Rayleigh backscattering, a portion of the optical signal of the COTDR backward scattered optical signal is looped back via the coupler 402 to the coupler 410, and the coupler 410 is connected with the output terminal of the optical amplification unit 412 of the downstream fiber 416; in the upstream fiber 415, a COTDR backward scattered optical signal is generated from the light output by the optical amplification unit 409 after Rayleigh backscattering, a portion of the optical signal of the COTDR backward scattered optical signal is looped back via the coupler 411 to the coupler 404, and the coupler 404 is connected with the output terminal of the optical amplification unit 403 of the downstream fiber 414. Similarly, in the downstream fiber 414, a COTDR backward scattered optical signal is generated from the light output by the optical amplification unit 403 after Rayleigh backscattering, a portion of the optical signal of the COTDR backward scattered optical signal is looped back via the coupler 404 to the coupler 411, and the coupler 411 is connected with the output terminal of the optical amplification unit 409 of the upstream fiber 415; and in the downstream fiber 416, a COTDR backward scattered optical signal is generated from the light output by the optical amplification unit 412 under after Rayleigh backscattering, a portion of the optical signal of the COTDR backward scattered optical signal is looped back via the coupler 410 to the coupler 402, and the coupler 402 is connected with the output terminal of the optical amplification unit 401 of the downstream fiber 413.

In the optical repeater according to the embodiment of this application, an out-to-out coupling cross-coupling path of the COTDR backward scattered optical signal is established between the upstream and downstream fiber links belonging to two different fiber pairs; and at the same time, no pump redundant backup relation exists between the upstream and downstream optical amplification units where the COTDR coupling cross-coupling path is established.

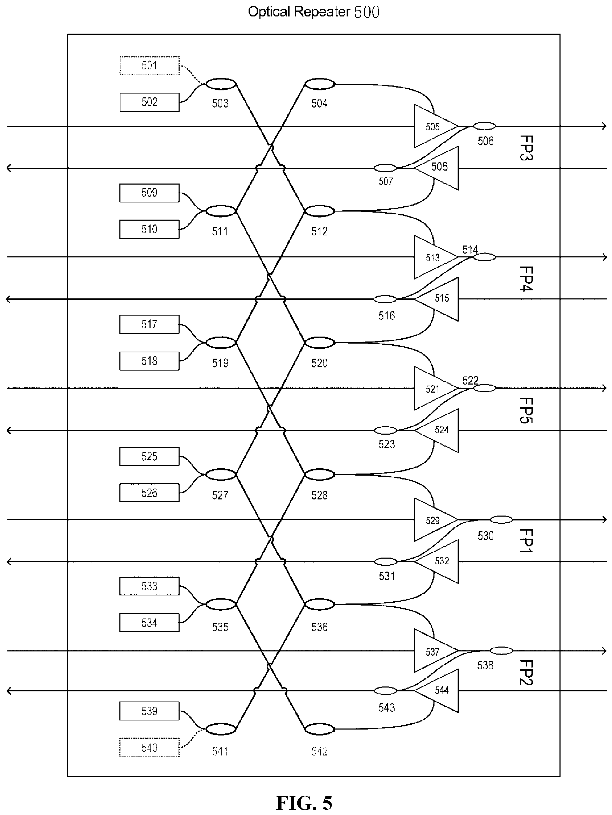

FIG. 5 is a structural diagram of another submarine network device according to one embodiment of this applicatiion. The submarine network device may be an optical repeater. The optical repeater 500 in FIG. 5 includes 5 fiber pairs. It may be known by a person of ordinary skills in the art that the number of fiber pairs may be adjusted as required. Wherein, the coupling cross-coupling path of a COTDR backward scattered optical signal is an out-to-out cross-coupling formed by connecting the detection ports of the output couplers of the upstream and downstream optical amplification units of the same fiber pair in the optical repeater 500. The pump redundant backup in the embodiment of this application employs an orthogonal design solution and consists of pump lasers 501-502, 509-510, 517-518, 525-526, 533-534, 539-540, primary fiber couplers 503, 511, 519, 527, 535, 541, secondary fiber couplers 504, 512, 520, 528, 536, 542 and EDFAs 505, 508, 513, 515, 521, 524, 529, 532, 537 and 544. The number of the pump lasers is the same as the number of the EDFAs. In FIG. 5, the pump lasers 501, 540 are represented by dashed lines for embodying expansibility, that is, more fiber pairs may be added based on the structure according to the embodiments of this application; if the optical repeater 500 only includes the 5 fiber pairs shown in FIG. 5, the pump laser 501 and the pump laser 540 will not exist, and the pump laser 539 and the pump laser 502 are connected directly via the coupler. Every two pump lasers form a group, and the two paths of pumping laser emitted are coupled by the primary 2×2 3dB fiber couplers (coupler 503, 511, 519, 527, 535 and 541), and two paths of primary sub-pumping light are output, wherein every path of primary sub-pumping light has 50% of the light energy emitted by the two pump lasers respectively. For example, the pumping light from the pump laser 517 and the pump laser 518 is input to the coupler 519, and then output by the coupler 519 to the couplers 512 and 528 at 50% thereof respectively. The pumping light of a group of (two) pump lasers 517 and 518 split by the primary coupler 519 is coupled, by the secondary 2×2 3dB coupler 528, with the pumping light of another group of pump laser 533 and 534 split by the primary coupler 535, and two paths of secondary sub-pumping light are output, wherein every path of secondary sub-pumping light has 25% of the light energy emitted by four pump lasers respectively. Every path of secondary sub-pumping light provides energy to one path of EDFA module. For example, the two paths of output of the secondary coupler 528 provide pumping energy to EDFA 524 and 529 respectively. The two paths of EDFA modules supported by two paths of secondary sub-pumping light from different secondary 2×2 fiber couplers form a fiber pair (FP). For example, for the two paths of EDFA of FP5, the pumping light of EDFA 524 comes from the coupler 528, and the pumping light of EDFA 521 comes from the coupler 520.

In the optical repeater according to the embodiment of this application, an out-to-out coupling cross-coupling path of the COTDR backward scattered optical signal is established between the upstream and downstream fiber links of the same fiber pair. A series of pump lasers are cross-connected with each other via the primary fiber coupler and the secondary fiber coupler, and pumping light is input to a series of optical amplification units. At the same time, each primary 2×2 fiber coupler couples the pumping light from two pump lasers and outputs as two paths of primary sub-pumping light. Each secondary 2×2 fiber coupler couples the two paths of primary sub-pumping light from different 2×2 primary fiber couplers and outputs as two paths of secondary sub-pumping light. Each path of secondary sub-pumping light provides energy to one path of EDFA module, the pumping laser output by each pump laser may provide each path 25% of energy to four paths of EDFA modules, and each path of EDFA module will receive 25% of pumping laser energy from the four pump lasers respectively. With the optical repeater structure, a 4×4 redundant design of multi-fiber pair system pump lasers to EDFA modules is realized. The primary fiber couplers and the secondary fiber couplers are cross-connected with each other to form a complete closed loop; it has a structural symmetry, and theoretically it may be expanded unlimitedly and applied to a submarine cable communication system with any number of fiber pairs greater than 3.

In the solution for detecting a pump fault of an optical repeater of an underwater device according to the embodiment of this application, by combining pump redundant protection and COTDR cross-coupling connection, not only can pump fault be detected in out-to-out cross-coupling mode, but also the noise figure of the optical repeater can be maintained at a low level.

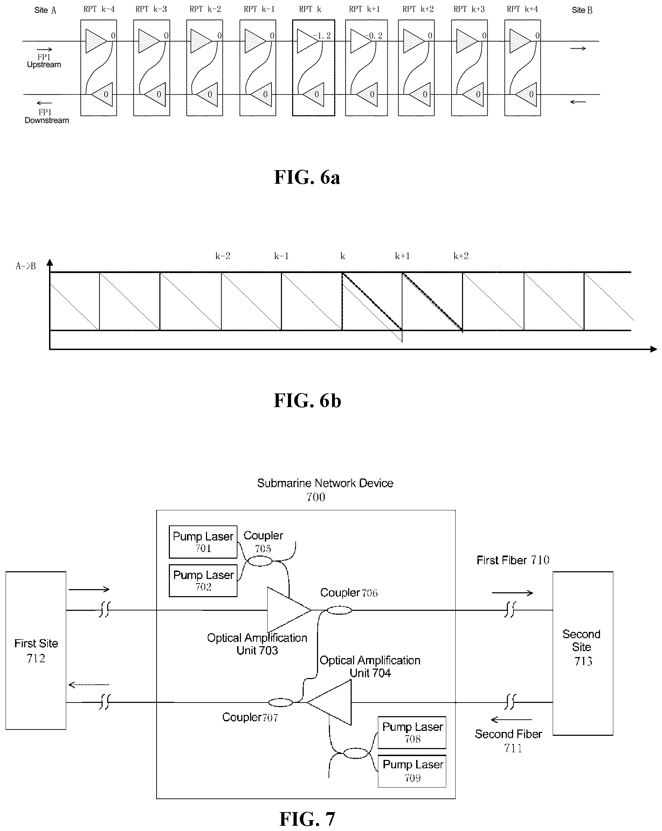

The optical amplification unit has a characteristic of output saturation effect. When the input light power of the amplifier reaches a threshold value, if the input light power increases or decreases in a certain range, the output light power will remain basically unchanged, and the corresponding amplifier gain will decrease or increase by an amount basically the same as the change of the input light power. As shown in FIG. 6a, RPT k has the same structure as other RPTs in FIG. 6a. Take RPT k for example, reference may be made to the optical repeater 400 in FIG. 4 for the structure of the RPT k in FIG. 6a. Assuming that the pump laser 405 fails, when fault occurs to one of the four redundant backup pump lasers of the optical amplification unit 401 on the upstream fiber 413 in the first fiber pair in the optical repeater 400 (corresponding to RPT k in FIG. 6a), the gain of the optical amplification unit 401 will decrease by about 1.2dB, and the output power will also decrease by 1.2dB correspondingly. In FIG. 6a, the output power of RPT k will decrease by 1.2 dB, and the output power of the downstream optical repeater RPT k+1 of the RPT k will only decrease by 0.2dB, but the output power of the downstream optical repeater RPT k+2 of the RPT k+1 will restore to a normal level, as shown in FIG. 6a. When the COTDR device of the land-side station A sends a detection light pulse to the upstream fiber link of the fiber pair 1, the curve of COTDR received on the downstream fiber link is shown by the solid line in FIG. 6b. Because the coupler 402 on the output terminal of the optical amplification unit 401 is connected with the coupler 410 on the output terminal of the optical amplification unit 412, a COTDR backward scattered optical signal is generated from the probe signal of the output terminal of the optical amplification unit 401 on the upstream fiber of RPT k after Rayleigh backscattering, and portion of the optical signal of the COTDR backward scattered optical signal is looped back via the coupler 402 to the coupler 410 and then return to site A along the downstream fiber 416. Because the optical amplification unit 401 and the optical amplification unit 412 do not share a pump laser, the fault of the pump laser 405 will only affect the gain of the optical amplification unit 401, without affecting the gain of the optical amplification unit 412. The scattered light power corresponding to the locations of RPT k and RPT k+1 respectively decreases by 1.2dB and 0.2dB in comparison with the detection curve under normal conditions (the dashed line in FIG. 6b). After the probe signal is transmitted from the coupler 402 to the coupler 410, the light power of the probe signal corresponding to RPT k and being detected after reaching site A along the downstream fiber 416 is decrease by 1.2dB. Because RPT k+1 and RPT k have the same structure, the light power of the probe signal corresponding to RPT k+1 is decrease by 0.2dB, and the variation corresponding to RPT k can be identified, thus the fault of the pump laser can be found in time.

As shown in FIG. 7, one embodiment of this application provides a submarine network device 700 connected between a first site 712 and a second site 713. The submarine network device 700 includes a first fiber 710 and a second fiber 711, and it further includes: at least one first pump laser 701, configured to supply pumping light to a first optical amplification unit 703; a first optical amplification unit 703 located in the first fiber 710, configured to receive a first probe signal sent from the first site 712 to the second site 713, and amplify and then output the first probe signal; a first fiber coupler 706 located in the first fiber 710, configured to receive a first reflected optical signal obtained from the amplified first probe signal under the action of Rayleigh backscattering, and send a portion of the first reflected optical signal to a second fiber coupler 707 located in the second fiber 711; at least one second pump laser 708, configured to supply pumping light to a second optical amplification unit 704; a second optical amplification unit 704, configured to amplify the second data optical signal sent by the second site 713 to the first site 712 and then output via the second fiber coupler; a second fiber coupler 707, configured to receive the portion of the first reflected optical signal output by the first fiber coupler 706, and send the portion of the first reflected optical signal toward the direction of the first site 712.

The submarine network device 700 according to one embodiment of this application may be an optical repeater, which may include two first pump lasers 701 and 702, and the first pump lasers 701 and 702 are connected to an optical amplification unit 703 via a coupler 705. Similarly, the submarine network device 700 may include two second pump lasers 708 and 709, each of the first pump lasers provides 50% of energy to the first amplification unit, and each of the second pump lasers provides 50% of energy to the second amplification unit. The first fiber 710 and the second fiber 711 may belong to the same fiber pair or different fiber pairs. The first optical amplification unit 705 and the second optical amplification unit 704 may be EDFAs.

In the submarine network device 700 according to the embodiment of this application, the first optical amplification unit 703 is further configured to receive a first data optical signal sent from the first site to the second site, and amplify and then output the first data optical signal; the second optical amplification unit 704 is further configured to receive the second data optical signal sent from the second site to the first site.

In the submarine network device 700 according to the embodiment of this application, the first fiber coupler 706 is further configured to receive the amplified first data optical signal output by the first optical amplification unit, and send the amplified first data optical signal toward the direction of the second site; the second fiber coupler 707 is further configured to receive the amplified second data optical signal output by the second optical amplification unit, and send the amplified second data optical signal toward the direction of the first site.

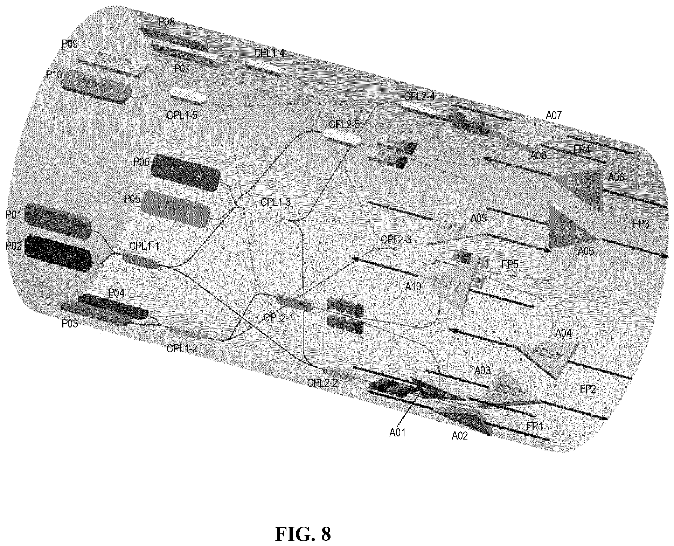

A 4x4 redundant backup design of the EDFA module is mentioned in the embodiment of FIG. 5. In practical application, more complex redundant backup designs may be employed. Referring to FIG. 8, FIG. 8 is a three-dimensional structure diagram of a submarine optical repeater according to one embodiment of this application, wherein the submarine optical repeater includes: a fiber, a pump laser, an EDFA, a primary fiber coupler and a secondary fiber coupler.

This application is mainly applied to multi-fiber pair scenes. In order to distinguish from the prior art solution, this application is generally applied to at least 3-fiber pair (six fibers) application scene, the number of the above the pump lasers, primary fiber couplers or secondary fiber couplers is no less than 3, and the number of the above EDFAs should correspond to the number of the fiber pairs. That is, every path of fiber should correspondingly have one EDFA, and therefore the number of EDFAs is no less than 6. It should be noted that, the above primary fiber coupler and secondary fiber coupler may be fiber couplers having the same structure, and it is merely the functions thereof are distinguished in this solution; specifically, the primary fiber coupler and the secondary fiber coupler in this application may be fiber couplers that include 2 input ports and 2 output ports and have a port loss of 3dB.

Wherein, a group of fiber pair (FP) refers to two paths of fibers connected with the receiving port and the sending port of a line terminating equipment (LTE), and the two paths of fibers form a communication link with one path for receiving and the other path for sending. Different fiber pairs are isolated from each other, that is, no physical connection exists between different fiber pairs.

The positional relationship and the function of each of the above apparatus will be further described below.

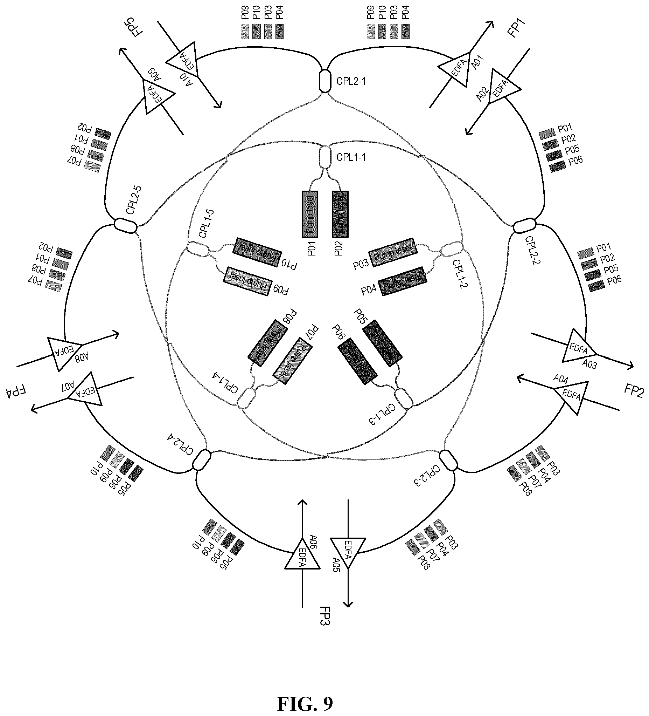

For ease of understanding, reference is made to FIG. 9. FIG. 9 is an unfolded view of the above FIG. 8, wherein a pump laser, an EDFA, a primary fiber coupler and a secondary fiber coupler are respectively provided in different planes; and each pump laser, each EDFA, each primary fiber coupler and each secondary fiber coupler are placed in a circle to form a closed structure; the input port of each primary fiber coupler is connected with at least one pump laser (for example, as shown in FIG. 8 or FIG. 9, the input port of each primary fiber coupler may be connected with two pump lasers), and the output port of each secondary fiber coupler is connected with two EDFAs; each primary fiber coupler in the primary fiber coupler set is adjacent to the another 2 primary fiber couplers in the primary fiber coupler set, and each secondary fiber coupler in the secondary fiber coupler set is adjacent to another 2 secondary fiber couplers in the secondary fiber coupler set; the output port of the primary fiber coupler is cross-connected with the input port of the secondary fiber coupler via a fiber; the two different secondary fiber couplers connected with each primary fiber coupler is spaced by a secondary fiber coupler; the two different primary fiber couplers connected with each secondary fiber coupler is spaced by a primary fiber coupler; and additionally, each primary fiber coupler has a secondary fiber coupler placed symmetrically thereto, the primary fiber coupler and the secondary fiber coupler may be on the same axis, and the axis is respectively vertical to the planes on which each primary fiber coupler and each secondary fiber coupler exists.

The pump laser is configured to emit pumping laser; the primary fiber coupler is configured to couple the pumping laser received and output two paths of primary pumping laser, wherein the two paths of primary pumping laser output are respectively output to two different secondary fiber couplers. Because the output port of the primary fiber coupler is cross-connected with the input port of the secondary fiber coupler via a fiber, the two secondary fiber couplers are spaced by another secondary fiber coupler; the secondary fiber coupler is configured to couple the primary pumping laser received, and output two paths of secondary pumping laser to two different EDFAs.

It should be noted that, each of the above apparatus is connected via a fiber.

It should be noted that, the EDFA includes an input port, an output port and a pump power input terminal, wherein, signal light is input from the input port of the EDFA via a fiber, the secondary pumping laser output by the secondary fiber coupler is input into the EDFA from the pump power input terminal, and the optical signal amplified by the EDFA is output from the output port of the EDFA via the fiber.

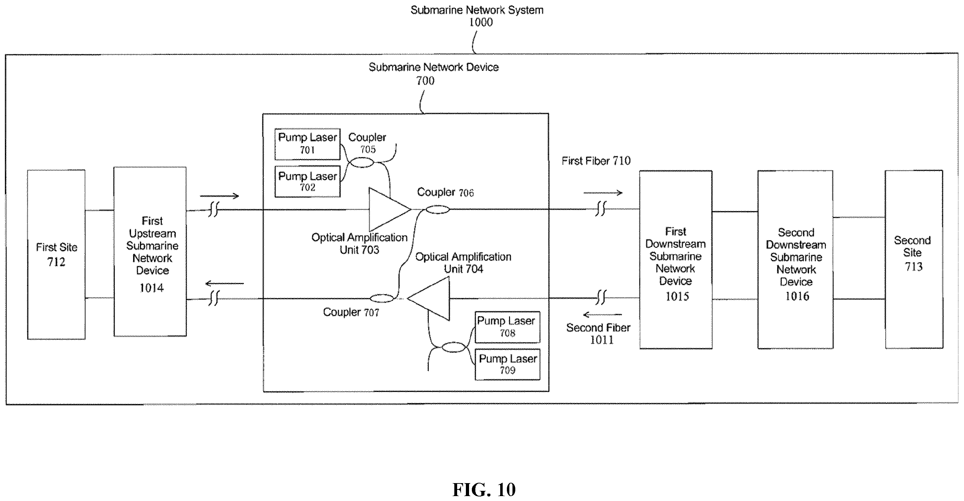

Referring to FIG. 10, one embodiment of this application provides a submarine cable system 1000, which includes the submarine network device shown in FIG. 7. For 700-713 in FIG. 10, reference may be made to 700-713 in FIG. 7. The submarine cable system 1000 further includes: a first site 712, configured to send a first probe signal to the submarine network device 700 via the first fiber 710; a first upstream submarine network device 1014, configured to receive a portion of the first reflected optical signal from the second fiber coupler 707, wherein the first reflected optical signal is obtained from the amplified first probe signal after Rayleigh backscattering, and send the portion of the first reflected optical signal toward the direction of the first site 712; a first site 712, configured to receive the portion of the first reflected optical signal, and judge whether a pump laser in the at least one first pump laser fails according to the intensity of the portion of the first reflected optical signal.

In one embodiment of this application, when it is judged that a fault occurs to the pump laser in at least one first pump laser, the submarine cable system 1000 may further include: a first downstream submarine network device 1015, configured to receive first data signal light from the first optical amplification unit 703 of the submarine network device 700, perform gain compensation on the first data signal light, and send the gain-compensated first data signal light toward the direction of the second site 713, wherein the output power of the first data signal light is less than a rated output power, and the rated output power is the output power of the light amplifier during the normal working. The submarine cable system may further include: a second downstream submarine network device 1016, configured to receive the gain-compensated first data signal light from the first downstream submarine network device 1015, and perform additional gain compensation on the gain-compensated signal light, wherein the output power of the gain-compensated first data signal light is less than the rated output power.

Only two first pump lasers for providing pumping energy to the first optical amplification unit 703 are drawn in FIG. 10. It should be understood that, the number of the first pump lasers providing pumping energy to the first optical amplification unit 703 may be one or more than two, for example, four first pump lasers may be employed to provide pumping energy to the first optical amplification unit 703. In the case that the gain of the data signal light output by the first optical amplification unit 703 decreases by 1.2dB due to the fault of the pump laser, the first downstream submarine network device may perform 1 dB gain compensation on the first data signal light, and the second downstream submarine network device 1016 may perform 0.2dB gain compensation on the first data signal light.

In the embodiments of this application, the output terminal of the first optical amplification unit on the upstream first fiber is connected with the output terminal of the second optical amplification unit on the downstream second fiber, and the first optical amplification unit and the second optical amplification unit respectively employ a different pump laser to provide pumping light; after one optical amplification unit fails, the probe signal emitted by the site may be looped back after Rayleigh backscattering to the fiber having another optical amplification unit and transmitted back to the site. Because the two optical amplification units do not share a pump laser, the optical amplification unit with no fault will not perform gain compensation on the power of the probe signal, and the site may fast detect a fault of a pump laser, so that a fault of an optical repeater may be positioned and restored in time, thereby shortening the service interruption time.

## Claims

1. A submarine network device, comprising a first fiber and a second fiber, and further comprising:
at least one first pump laser, configured to supply pumping light to a first optical amplification unit;
the first optical amplification unit located in the first fiber, configured to receive a first probe signal sent from a first site to a second site, and amplify and then output the first probe signal;
a first fiber coupler located in the first fiber, configured to receive a first reflected optical signal and send a portion of the first reflected optical signal to a second fiber coupler located in the second fiber, wherein the first reflected optical signal is obtained from the amplified first probe signal after Rayleigh backscattering;
at least one second pump laser, configured to supply pumping light to a second optical amplification unit;
the second optical amplification unit located in the second fiber, configured to amplify a second data optical signal sent by the second site to the first site and then output via the second fiber coupler;
the second fiber coupler, configured to receive the portion of the first reflected optical signal output by the first fiber coupler and send the portion of the first reflected optical signal toward the direction of the first site.

2. The submarine network device according to claim 1, comprising: a fiber set, a pump laser set, an optical amplification unit set, a primary fiber coupler set and a secondary fiber coupler set; wherein the fiber set comprises the first fiber and the second fiber, the optical amplification unit set comprises the first optical amplification unit and the second optical amplification unit, and the pump laser set comprises the first pump laser and the second pump laser; wherein, the primary fiber coupler set comprises N primary fiber couplers, the secondary fiber coupler set comprises N secondary fiber couplers, the N being an integer greater than or equal to 3; the fiber set is configured to connect the pump laser set, the primary fiber coupler set, the secondary fiber coupler set and the optical amplification unit set; an input port of each primary fiber coupler in the primary fiber coupler set is at least connected with a pump laser; an output port of each secondary fiber coupler in the secondary fiber coupler set is connected with at least one erbium doped fiber amplifier (EDFA); each primary fiber coupler in the primary fiber coupler set is adjacent to another 2 primary fiber couplers in the primary fiber coupler set, and each secondary fiber coupler in the secondary fiber coupler set is adjacent to another 2 secondary fiber couplers in the secondary fiber coupler set; an output port of each primary fiber coupler in the primary fiber coupler set is respectively connected with two different secondary fiber couplers that are spaced by one secondary fiber coupler; and an input port of each secondary fiber coupler in the secondary fiber coupler set is respectively connected with two different primary fiber couplers that are spaced by one primary fiber coupler;
each pump laser in the pump laser set is configured to emit pumping laser; each primary fiber coupler in the primary fiber coupler set is configured to couple the pumping laser received, and output two paths of primary pumping laser, wherein the two paths of primary pumping laser are respectively output to the two different secondary fiber couplers; and each secondary fiber coupler in the secondary fiber coupler set is configured to couple the primary pumping laser received, and output at least one path of secondary pumping laser to the at least one EDFA.

3. The submarine network device according to claim 1, wherein the submarine network device comprises 2 first pump lasers and 2 second pump lasers, each of the first pump lasers provides 50% of energy to the first amplification unit, and each of the second pump lasers provides 50% of energy to the second amplification unit; or
the submarine network device comprises 4 first pump lasers or 4 second pump lasers, each of the first pump lasers provide 25% of energy to the first amplification unit, and each of the second pump lasers provides 25% of energy to the second amplification unit.

4. The submarine network device according to any one of claims 1-3, wherein the first fiber and the second fiber belong to the same fiber pair, or the first fiber and the second fiber belong to different fiber pairs.

5. The submarine network device according to any one of claims 1-3, wherein the first optical amplification unit and the second optical amplification unit are EDFAs.

6. The submarine network device according to any one of claims 1-3, wherein the submarine network device is an optical repeater.

7. The submarine network device according to any one of claims 1-3, wherein the first optical amplification unit is further configured to:
receive a first data optical signal sent from the first site to the second site, and amplify and then output the first data optical signal.

8. The submarine network device according to any one of claims 1-3, wherein the second optical amplification unit is further configured to:
receive the second data optical signal sent from the second site to the first site.

9. The submarine network device according to any one of claims 1-3, wherein the first fiber coupler is further configured to:
receive the amplified first data optical signal output by the first optical amplification unit, and send the amplified first data optical signal toward the direction of the second site.

10. The submarine network device according to any one of claims 1-3, wherein the second fiber coupler is further configured to:
receive the amplified second data optical signal output by the second optical amplification unit, and send the amplified second data optical signal toward the direction of the first site.

11. A submarine cable system, comprising the submarine network device according to any one of claims 1-10, and further comprising:
the first site, configured to send the first probe signal to the submarine network device via the first fiber;
a first upstream submarine network device, configured to receive the portion of the first reflected optical signal from the second fiber coupler, and send the portion of the first reflected optical signal toward the direction of the first site; wherein the first reflected optical signal is obtained from the amplified first probe signal after Rayleigh backscattering; and the first site is configured to receive the portion of the first reflected optical signal, and judge whether a pump laser in the at least one first pump laser fails according to the intensity of the portion of the first reflected optical signal.

12. The submarine cable system according to claim 11, wherein a pump laser in the at least one first pump laser fails, and the submarine cable system further comprises:
a first downstream submarine network device, configured to receive first data signal light from the first optical amplification unit of the submarine network device, perform gain compensation on the first data signal light, and send the gain-compensated first data signal light toward the direction of the second site; wherein the output power of the first data signal light is less than a rated output power, and the rated output power is an output power during the normal working of the first optical amplification unit.

13. The submarine cable system according to claim 12, further comprising:
a second downstream submarine network device, configured to receive the gain-compensated first data signal light from the first downstream submarine network device, and perform additional gain compensation on the gain-compensated first data signal light; wherein the gain-compensated first data signal light is less than the rated output power.
